# EUROPÄISCHE PATENTSCHRIFT

(11) **EP 2 417 379 B1**
(45) Veröffentlichungstag und Bekanntmachung des Hinweises auf die Patenterteilung: **01.05.2013**
(21) Anmeldenummer: 10718898.9
(22) Anmeldetag: 31.03.2010
(51) Int. Cl.: F16H 61/04

(54) **VERFAHREN ZUM BETREIBEN EINES GETRIEBES MIT MINDESTENS EINEM FORMSCHLÜSSIGEN SCHALTELEMENT**
METHOD FOR OPERATING A TRANSMISSION WITH AT LEAST ONE POSITIVE-LOCKING SHIFTING ELEMENT
PROCÉDÉ POUR FAIRE FONCTIONNER UNE BOÎTE DE VITESSES COMPORTANT AU MOINS UN ÉLÉMENT DE PASSAGE À COMPLÉMENTARITÉ DE FORME

(30) Priorität: 06.04.2009 DE 102009002205
(43) Veröffentlichungstag der Anmeldung: 15.02.2012
(73) Patentinhaber: ZF Friedrichshafen AG, 88038 Friedrichshafen (DE)
(72) Erfinder: ARNOLD, Joerg, 88090 Immenstaad (DE); HERBETH, Valentine, 88045 Friedrichshafen (DE); MIHATSCH, Georg, 88131 Lindau (DE)
(86) Internationale Anmeldenummer: PCT/EP2010/054312
(87) Internationale Veröffentlichungsnummer: WO 2010/115807

(56) Entgegenhaltungen:
- EP-A2- 1 767 829
- DE-A1- 19 756 637
- DE-A1- 19 915 200
- DE-A1-102005 054 767
- DE-A1-102006 046 605
- DE-A1-102008 000 429

## Beschreibung

Die Erfindung betrifft ein Verfahren zum Betreiben eines Getriebes mit mindestens einem formschlüssigen Schaltelement gemäß der im Oberbegriff des Patentanspruches 1 näher definierten Art.

Eine Schalteinrichtung zur Verbindung von mit unterschiedlichen Drehzahlen rotierenden Bauteilen eines Getriebes ist aus der DE 197 56 637 A1 bekannt. Für jede Schaltgruppe eines Stufenwechselgetriebes ist in der Schalteinrichtung eine Einheit vorgesehen, in der Ventile, Schaltzylinder, Kolben und Schaltelemente zusammengefasst sind. Als auslösende Ventile werden gepulste 2/2-Wegeventile verwendet. Zusätzlich ist jeweils eine Wegmesseinrichtung vorgesehen, über die eine aktuelle Position eines Kolbens in Bezug auf einen Schaltzylinder anzeigbar ist. Beim Einschalten von Zahnrädern in eine Drehmoment übertragende Verbindung besteht somit die Möglichkeit, eine Anpassung von Schaltkraft und Schaltzeit vorzunehmen.

Zum Schalten eines Schaltkolbens im Schaltzylinder wird aus einer externen Druckquelle über Druckleitungen ein pneumatisches oder hydraulisches Druckmittel der Schalteinrichtung zugeführt. In den Druckleitungen sind jeweils zwei elektromagnetische 2/2-Wegeventile zwischengeschaltet, die den Durchfluss des Druckmittels durch die Druckleitungen derart steuern, dass sich der Schaltkolben mit einer Geschwindigkeit bewegt, die einer empirisch oder über eine Simulation ermittelten Optimalgeschwindigkeit in dieser Wegposition entspricht.

Die Ansteuerung der pulsfähigen Ventile ist dabei so ausgelegt, dass alle Ventile einzeln, gegeneinander oder miteinander ansteuerbar sind. Dadurch sind unterschiedliche Geschwindigkeiten des Schaltkolbens und somit auch unterschiedliche dynamische Kräfte darstellbar.

Die Schaltkolbengeschwindigkeit wird von jeweils zwei pulsfähigen 2/2-Wegeventilen derart variiert, dass der Schaltkolben während des Schaltweges bis zu einem Synchronisationsbeginn des Getriebes möglichst mit voller Druckkraft bewegt wird und nach dem Ende der Synchronisierungsphase mit geringer Geschwindigkeit in seine Endstellung gebracht wird.

Beim Eintritt in eine Synchronisierungsphase des Getriebes verharrt der Schaltkolben kurz vor seinem Anschlag an einer Anschlagfläche in einer Sperrstellung, wobei die Druckbeaufschlagung des Schaltkolbens in dieser Stellung durch eine weitere Druckmittelbeaufschlagung über die Druckmittelleitungen erheblich zunimmt.

Mit der vorgeschlagenen Schalteinrichtung ist aufgrund der elektronischen Ansteuerung der gepulsten Ventile eine Variation der Synchronzeiten möglich. Damit lassen sich die Synchronisiervorgänge für Schaltungen in der Ebene, in Gefällen und Steigungen unterschiedlich durchführen. Bei Schaltungen in der Ebene können die Synchronisiereinrichtungen mit einer maximalen Schonung bedient werden. Im Gefälle lassen sich die Synchronisiereinrichtungen mit einer höheren Pulsfrequenz beaufschlagen und bis zu einer maximalen Belastung ausnutzen, was dort zu sicherheitsrelevanten kürzeren Schaltzeiten führen kann. Durch die Variabilität der Schalt- bzw. Synchronkräfte sind die Schaltgeschwindigkeiten optimierbar.

Zur Vermeidung von Schaltungen bei Vorliegen einer Zahn-auf-Zahn-Stellung zwischen den jeweils zu verbindenden Verzahnungen wird eine Überwachung eines solchen Betriebszustandes vorgeschlagen. Bei Vorliegen einer Zahn-auf-Zahn-Stellung wird die Synchronkraft minimiert, mit der der Schaltkolben während der Synchronisierungsphase beaufschlagt wird, um in der dem formschlüssigen Schaltelement zugeordneten Synchronisierung ein Schleppmoment zu erzielen und die Zahn-auf-Zahn-Stellung im Bereich des formschlüssigen Schaltelementes aufzuheben.

Nachteilig dabei ist jedoch, dass die zum Synchronisieren von formschlüssigen Schaltelementen vorgesehenen mechanischen Synchronisierungen einen großen Bauraumbedarf aufweisen und durch einen hohen konstruktiven sowie Steuer- und Regelaufwand gekennzeichnet sind.

Schaltungen bzw. Lastschaltungen, die zumindest mit einem reinen formschlüssigen Schaltelement ohne diesem zugeordneter mechanischer Synchronisierung durchgeführt werden, sind im Gegensatz zu Schaltungen, an welchen wenigstens ein über eine mechanische Synchronisierung synchronisierbares formschlüssiges Schaltelement beteiligt ist, nicht in gewünschtem Umfang mit reproduzierbarer Schaltgüte und innerhalb vordefinierter Schaltzeiten durchführbar, da ein Schließzeitpunkt von rein formschlüssigen Schaltelementen mit herkömmlichen Vorgehensweisen bekannterweise nicht in gewünschtem Umfang zu einem vordefinierten Zeitpunkt herstellbar ist.

Der vorliegenden Erfindung liegt daher die Aufgabe zu Grunde, ein Verfahren zum Betreiben eines Getriebes mit mindestens einem formschlüssigen Schaltelement zur Verfügung zu stellen, mittels welchem ein an einer Schaltung beteiligtes formschlüssiges Schaltelement ohne zusätzliche mechanische Synchronisierung mit reproduzierbarer hoher Schaltgüte innerhalb vordefinierter Schaltzeiten in gewünschtem Umfang betätigbar ist.

Erfindungsgemäß wird diese Aufgabe mit einem Verfahren mit den Merkmalen des Patentanspruches 1 gelöst.

Bei dem erfindungsgemäßen Verfahren zum Betreiben eines Getriebes mit mindestens einem formschlüssigen Schaltelement mit wenigstens zwei miteinander im Bereich von Zahnprofilen in formschlüssigen Eingriff bringbaren Schaltelementhälften erfolgt ein Öffnen und Schließen des formschlüssigen Schaltelementes durch eine in Abhängigkeit einer Betätigungskraft des formschlüssigen Schaltelementes stehende Relativbewegung zwischen zu einem geöffneten Betriebszustand des formschlüssigen Schaltelementes äquivalenten ersten Endpositionen und zu einem geschlossenen Betriebszustand des formschlüssigen Schaltelementes äquivalenten zweiten Endpositionen der Schaltelementhälften. Während eines Schließvorganges wird das Auftreten einer Zahn-auf-Zahn-Stellung des formschlüssigen Schaltelementes überwacht, zu welchen sich die Schaltelementhälften ohne Formschluss in zwischen den ersten Endpositionen und den zweiten Endpositionen angeordneten Stellungen befinden und lediglich im Bereich einander zugewandter Stirnflächen der Zahnprofile miteinander in Reibeingriff stehen. Bei einer Anforderung zum Schließen des formschlüssigen Schaltelementes wird das formschlüssige Schaltelement mit einer das Schaltelement in Schließrichtung betätigenden Betätigungskraft beaufschlagt.

Um Schaltungen, vorzugsweise Lastschaltungen, mit einem reinen formschlüssigen Schaltelement mit wiederholbarer Schaltgüte innerhalb vordefinierter Schaltzeiten durchführen zu können, werden bei einer Anforderung zum Schließen des formschlüssigen Schaltelementes eine aktuelle Differenzdrehzahl zwischen den Schaltelementhälften des formschlüssigen Schaltelementes sowie die aktuellen Positionen der Schaltelementhälften ermittelt und die Betätigungskraft wird bei Vorliegen einer Differenzdrehzahl kleiner als ein erster Differenzdrehzahlschwellwert und einer Zahn-auf-Zahn-Stellung des formschlüssigen Schaltelementes zur Auflösung der Zahn-auf-Zahn-Stellung auf ein Auflösniveau geführt, zu dem sich zwischen den Schaltelementhälften eine Differenzdrehzahl oberhalb eines zweiten Differenzdrehzahlschwellwertes einstellt.

Mit der erfindungsgemäßen Vorgehensweise wird insbesondere während Lastschaltungen jeweils ein Zuschalten bzw. Schließen eines rein formschlüssigen Schaltelementes ohne zusätzliche mechanische Synchronisierung auf einfache Art und Weise mit hoher Schaltgüte und innerhalb vordefinierter Schaltzeiten gewährleistet. Dies resultiert aus der Tatsache, dass bei Vorliegen einer Zahn-auf-Zahn-Stellung im Bereich von Zahnprofilen eines reinen formschlüssigen Schaltelementes, die ein sofortiges Einspuren eines Schaltelementes und die Herstellung des Formschlusses verhindert, die Zahn-auf-Zahn-Stellung auf einfache Art und Weise durch Führen, vorzugsweise Absenken, der Betätigungskraft auf ein Auflösniveau der Betätigungskraft, zu dem sich zwischen den Schaltelementhälften des formschlüssigen Schaltelementes eine Differenzdrehzahl größer als ein zweiter Differenzdrehzahlschwellwert einstellt ohne zusätzliche mechanische Synchronisierung innerhalb definierter Schaltzeiten mit reproduzierbarer Schaltgüte aufgehoben und der gewünschte Formschluss hergestellt wird.

Bei einer Betätigung eines formschlüssigen Schaltelementes mit einer Betätigungskraft auf dem Auflösniveau sinkt die Reibung im Bereich der Stirnflächen der Zahnprofile zwischen den Schaltelementhälften zumindest kurzfristig, womit eine Differenzdrehzahl zwischen den Schaltelementhälften ansteigt und die auf Grund der Zahn-auf-Zahn-Stellung vorliegende reibschlüssige Verbindung zwischen den Schaltelementhälften kontrolliert aufgelöst wird. Damit wird ein eine Schaltgüte beeinträchtigendes unkontrolliertes, schlagartiges Auflösen der Zahn-auf-Zahn-Stellung auf einfache und kosten- sowie bauraumgünstige Art und Weise vermieden. Zusätzlich sind Schaltungen, vorzugsweise Lastschaltungen, während welchen jeweils ein formschlüssiges Schaltelement zuzuschalten ist, über die erfindungsgemäße Vorgehensweise auch innerhalb vordefinierter Schaltzeiten durchführbar, da der Schließzeitpunkt eines formschlüssigen Schaltelementes durch das gezielte Auflösen einer Zahn-auf-Zahn-Stellung wiederholbar exakt darstellbar ist.

Bei einer vorteilhaften Variante des erfindungsgemäßen Verfahrens wird das Auflösniveau der Betätigungskraft in Abhängigkeit des aktuell über das formschlüssige Schaltelement zu führenden Drehmomentes variiert. Dies bietet auf einfache Art und Weise die Möglichkeit, eine Zahn-auf-Zahn-Stellung des formschlüssigen Schaltelementes betriebszustandsabhängig aufzulösen. So wird das Auflösniveau der Betätigungskraft beispielsweise bei höheren über das formschlüssige Schaltelement zu führenden Drehmomenten höher vorgegeben als bei geringeren über das formschlüssige Schalelement zu führenden Drehmomenten. Damit wird erreicht, dass die Differenzdrehzahl während einer Schaltung zwischen den Schaltelementhälften unabhängig vom aktuell über das formschlüssige Schaltelement zu führenden Drehmoment im Wesentlichen bei allen Schaltungen innerhalb eines für eine Betätigung des formschlüssigen Schaltelementes vorteilhaften Drehzahlbereiches liegt.

Um das Auflösen der Zahn-auf-Zahn-Stellung im Bereich des formschlüssigen Schaltelementes mit hoher Spontaneität durchführen zu können, wird die Betätigungskraft sprungartig auf das Auslösniveau geführt.

Wenn die Betätigungskraft über eine Rampe auf das Auflösniveau geführt wird, ist das Systemverhalten des formschlüssigen Schaltelementes bzw. das Auflösen einer Zahn-auf-Zahn-Stellung mit höherer Sensibilität als bei einer sprunghaften Änderung der Betätigungskraft durchführbar, was sich wiederum positiv auf die Schaltgüte auswirkt.

Die Betätigungskraft wird bei Erkennen einer Auflösung einer Zahn-auf-Zahn-Stellung im Bereich des formschlüssigen Schaltelementes bei weiteren vorteilhaften Varianten des erfindungsgemäßen Verfahrens sprungartig oder rampenförmig auf ein das formschlüssige Schaltelement schließendes Schließniveau geführt, wobei eine Schaltgüte über eine rampenförmige Änderung der Betätigungskraft mit höherer Sensibilität einstellbar ist als bei einer sprungartigen Änderung der Betätigungskraft, was sich wiederum positiv auf die Schaltgüte auswirkt.

Das Schließniveau der Betätigungskraft ist in Abhängigkeit des aktuell über das formschlüssige Schaltelement zu führenden Drehmomentes variierbar, womit das formschlüssige Schaltelement betriebszustandsabhängig in geschlossenem Betriebszustand führ- und haltbar ist.

Der erste Differenzdrehzahlschwellwert und/oder der zweite Differenzdrehzahlschwellwert sind bei weiteren vorteilhaften Ausführungsformen im Wesentlichen gleich Null.

Darüber hinaus besteht in Abhängigkeit des jeweils vorliegenden Anwendungsfalles die Möglichkeit, dass der zweite Differenzdrehzahlschwellwert größer oder gleich als der erste Differenzdrehzahlschwellwert ist, der auch ungleich Null sein kann, um die angeforderte Schaltung innerhalb einer vordefinierten Schaltzeit mit hoher Schaltgüte durchführen zu können.

Dabei können die Differenzdrehzahlschwellwerte empirisch ermittelt und in Datenquellen, wie Kennlinien, Kennfeldern oder Tabellen, hinterlegt sein, wobei die Datenquellen vordefiniert und/oder über der Lebensdauer eines Schaltelementes, in Abhängigkeit eines Fahrertyps oder anderer geeigneter Vorgaben adaptierbar ausgeführt sein können. Darüber hinaus werden die Differenzdrehzahlschwellwerte bei weiteren Varianten des erfindungsgemäßen Verfahrens über geeignete Modelle theoretisch in Abhängigkeit verschiedener Betriebsparameter des formschlüssigen Schaltelementes, des das formschlüssige Schaltelement aufweisenden Getriebes und/oder des mit dem Getriebe ausgeführten Antriebsstranges eines Fahrzeuges bestimmt.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: ein Räderschema eines Getriebe mit mehreren reib- und formschlüssigen Schaltelementen zum Darstellen verschiedener Übersetzungen;
- Fig. 2: ein Schaltschema des Getriebes gemäß Fig. 1;
- Fig. 3: eine stark schematisierte Darstellung eines formschlüssigen Schaltelementes des Getriebes gemäß Fig. 1; und
- Fig. 4: mehrere alternative Verläufe verschiedener Betriebszustandsparameter des Getriebes gemäß Fig. 1 während einer Rückschaltung über der Zeit t.

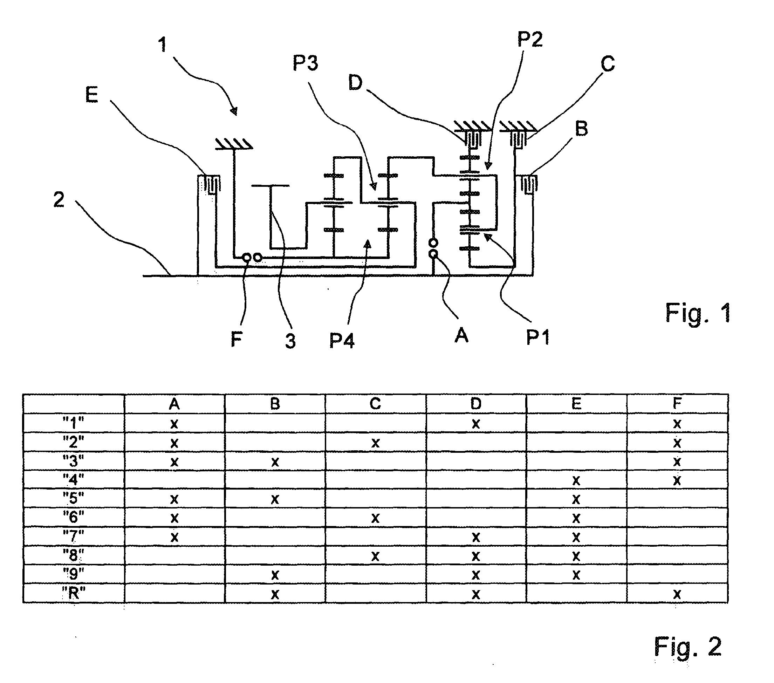

In Fig. 1 ist ein Räderschema eines Getriebes 1 bzw. eines Mehrstufengetriebes dargestellt, welches grundsätzlich aus der unveröffentlichten deutschen Patentanmeldung DE 10 2008 000 429.4 der Anmelderin bekannt ist. Das Getriebe 1 umfasst eine Antriebswelle 2 und eine Abtriebswelle 3, welche in in einem Fahrzeug montierten Zustand mit einem Abtrieb des Fahrzeuges verbunden ist, während die Antriebswelle 2 mit einer Antriebsmaschine wirkverbunden ist.

Zusätzlich ist das Getriebe 1 mit vier Planetenradsätzen P1 bis P4 ausgeführt, wobei der erste und der zweite Planetenradsatz P1, P2, die vorzugsweise als Minus-Planetenradsätze ausgebildet sind, einen schaltbaren Vorschaltradsatz bilden, während der dritte und der vierte Planetenradsatz P3, P4 den Hauptradsatz darstellen. Zusätzlich umfasst das Getriebe 1 sechs Schaltelemente A bis F, wovon die Schaltelemente B, D und E als Bremsen und die Schaltelemente A, C und F als Schaltkupplungen ausgeführt sind.

Mit den Schaltelementen A bis F ist über die in Fig. 2 näher dargestellte Schaltlogik ein selektives Schalten von neun Vorwärtsgängen "1" bis "9" und einem Rückwärtsgang "R" realisierbar, wobei bis auf den vierten Vorwärtsgang "4" zur Darstellung einer Übersetzungsstufe in dem Getriebe 1 bzw. zum Herstellen eines Kraftflusses in dem Getriebe 1 jeweils gleichzeitig drei Schaltelemente in einen geschlossenen Betriebszustand zu führen bzw. zu halten sind.

Die Schaltelemente A und F sind vorliegend als reine formschlüssige Schaltelemente ohne zugeordnete mechanische Synchronisierung ausgebildet, um im Betrieb des Getriebes 1 im Vergleich zu Getriebeeinrichtungen, die nur mit reibschlüssigen Schaltelementen ausgebildet sind, durch geöffnete reibschlüssige Schaltelemente verursachte Schleppmomente zu reduzieren, und im Vergleich zu Getrieben, die mit formschlüssigen Schaltelementen mit zugeordneten Synchronisierungen ausgeführt sind, Schaltungen mit einem bauraum-und kostengünstigeren Getriebe durchführen zu können.

Im Allgemeinen ist bei als Automatgetrieben ausgeführten Getrieben, die neben reibschlüssigen Schaltelementen auch formschlüssige Schaltelemente verwenden, trotz vorliegender Betätigung eines formschlüssigen Schaltelementes während einer Schaltung nicht immer der zur Übertragung des anliegenden Drehmomentes notwendige Formschluss im Bereich eines formschlüssigen Schaltelementes herstellbar. Dies ist beispielsweise bei Vorliegen einer so genannten Zahn-auf-Zahn-Stellung der Fall. Insbesondere während einer Rückschaltung, während der ein formschlüssiges Schaltelement zuzuschalten ist, ist das formschlüssige Schaltelement auf Grund einer Zahn-auf-Zahn-Stellung nicht vollständig schließbar und der erforderliche Formschluss erreichbar. Die gleiche Problematik liegt auch bei Hochschaltungen vor, bei welchen das zuzuschaltende Schaltelement als formschlüssiges Schaltelement ausgebildet ist. Da eine Zahn-auf-Zahn-Stellung im Betrieb von Getrieben wesentlich häufiger vorliegt als ein direkter Einspurvorgang von formschlüssigen Schaltelementen, wird während Schaltungen im Bereich von formschlüssigen Schaltelementen oftmals zunächst der angestrebte Formschluss nicht innerhalb einer vordefinierten Schaltzeit hergestellt.

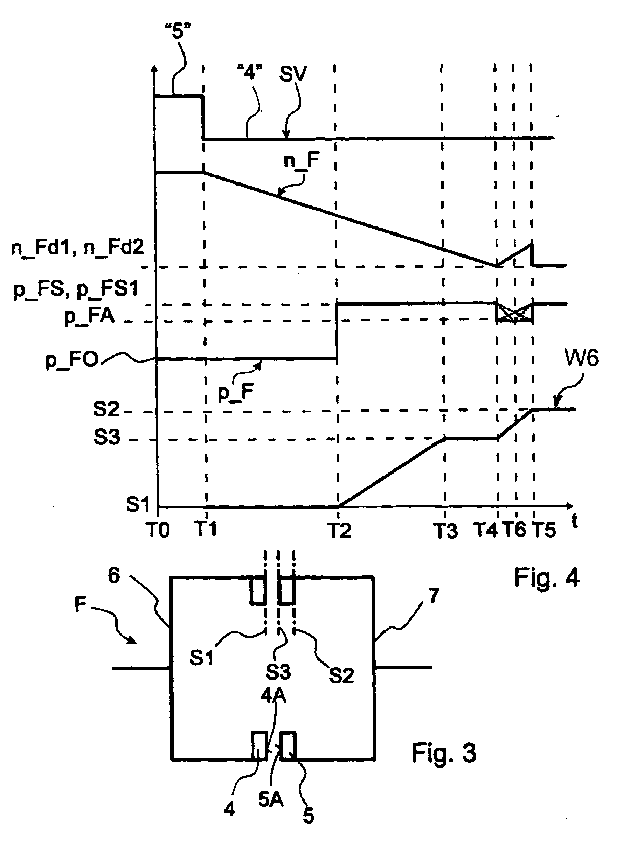

In Fig. 3 ist das Schaltelement F in einer schematisierten vergrößerten Einzelansicht gezeigt, welches während einer Rückschaltung vom fünften Vorwärtsgang "5" in den vierten Vorwärtsgang "4" innerhalb einer vordefinierten Schaltzeit und zur Erzielung einer hohen Schaltgüte kontrolliert zu schließen ist. Das mit den zwei miteinander im Bereich der Zahnprofile 4, 5 in formschlüssigen Eingriff bringbaren Schaltelementhälften 6 und 7 ausgeführte formschlüssige Schaltelement F wird durch eine in Abhängigkeit einer Betätigungskraft des formschlüssigen Schaltelementes F stehende Relativbewegung zwischen zu einem geöffneten Betriebszustand des formschlüssigen Schaltelementes F äquivalenten ersten Endpositionen S1 und zu einem geschlossenen Betriebszustand des formschlüssigen Schaltelementes F äquivalenten zweiten Endpositionen S2 der Schaltelementhälften 4 und 5 geöffnet und geschlossen. Dabei ist die Schaltelementhälfte 7 vorliegend immobil ausgeführt, während die erste Schaltelementhälfte 6 zwischen der ersten Schaltstellung S1 und der zweiten Schaltstellung S2 in axialer Richtung in Bezug auf die zweite Schaltelementhälfte 7 verfahrbar ausgebildet ist.

Bei weiteren Ausführungsformen des formschlüssigen Schaltelementes F ist die erste Schaltelementhälfte 6 in axialer Richtung unbeweglich ausführt und die zweite Schaltelementhälfte 7 in einem für die Betätigung des Schaltelementes F erforderlichen Umfang in Bezug auf die Schaltelementhälfte 6 in axialer Richtung mobil ausgebildet oder es sind beide Schaltelementhälften 6 und 7 in axialer Richtung verschiebbar.

Während eines Schließvorganges wird das Schaltelement F vorliegend in an sich bekannter Art und Weise mit einem hydraulischen Betätigungsdruck beaufschlagt, der über einen nicht näher dargestellten Stellkolben in mechanische Energie umgewandelt wird und die Schaltelementhälfte 6 in Bezug auf die zweite Schaltelementhälfte 7 in axialer Richtung verschiebt.

Auf Grund der vorbeschriebenen Umstände tritt im Bereich des Schaltelementes F oft eine Zahn-auf-Zahn-Stellung auf, die den durch die Rückschaltung angestrebten Formschluss im Bereich des Schaltelementes F verhindert. Dann liegt zwischen den Schaltelementhälften 6 und 7 im Bereich einander zugewandter Stirnflächen 4A, 5A der Zahnprofile 4, 5 eine reibschlüssige, vorzugsweise schlupffreie Verbindung vor, die sich im Betrieb des Getriebes 1 bei Überschreiten eines bestimmten Lastpunktes schlagartig auflöst. Der Formschluss des formschlüssigen Schaltelementes F entsteht dabei unkontrolliert und abrupt, wodurch unter Umständen einen Fahrkomfort beeinträchtigende Geräusche erzeugt werden.

Anhand der Darstellung gemäß Fig. 4 wird nachfolgend eine Vorgehensweise vorgestellt, mit der Schaltungen, an welchen jeweils wenigstens eines der formschlüssigen Schaltelemente A oder F des Getriebes 1 beteiligt ist, mit reproduzierbarer Schaltgüte und innerhalb vordefinierter Schaltzeiten durchführbar sind. Das Verfahren wird während einer Rückschaltung vom fünften Vorwärtsgang "5" in den vierten Vorwärtsgang "4" durchgeführt. Insbesondere sind mittels des nachfolgend näher beschriebenen Verfahrens Schaltungen mit reproduzierbaren Schaltzeiten ohne ein unkontrolliertes, schlagartiges Auflösen einer Zahn-auf-Zahnstellung im Bereich eines formschlüssigen Schaltelementes A oder F durchführbar, womit die formschlüssigen Schaltelemente A und F wesentlich geräuschärmer schließbar bzw. einspurbar sind als mit herkömmlichen Schaltabläufen.

Zu einem Zeitpunkt T0 ist im Getriebe 1 der fünfte Vorwärtsgang "5" eingelegt und zu einem Zeitpunkt T1 ergeht eine Anforderung für eine Rückschaltung vom fünften Vorwärtsgang "5" in den vierten Vorwärtsgang "4", weshalb ein über der Zeit t dargestellter Schaltverlauf SV von einem zum fünften Vorwärtsgang "5" äquivalenten Wert auf einen zum vierten Vorwärtsgang "4" umspringt. Zur Durchführung der angeforderten Rückschaltung ist das formschlüssige Schaltelement F zu schließen, während das formschlüssige Schaltelement A und das reibschlüssige Schaltelement B zu öffnen sind.

Zum Schaltanforderungszeitpunkt T1 werden die Übertragungsfähigkeiten der Schaltelemente A und B reduziert. Durch Herabsetzen der Übertragungsfähigkeit des zu öffnenden reibschlüssigen Schaltelementes B bei gleichzeitig geöffnetem formschlüssigen Schaltelement A sinkt die Differenzdrehzahl n_F ab dem Zeitpunkt T1 ab.

Zum Umsetzen der Schließanforderung des formschlüssigen Schaltelementes F ist das formschlüssige Schaltelement F im Bereich der Schaltelementhälfte 6 mit einer das formschlüssige Schaltelement F in Schließrichtung betätigenden Betätigungskraft zu beaufschlagen. Hierfür wird der Betätigungsdruck p_F bzw. die Betätigungskraft des formschlüssigen Schaltelementes F ab einem Zeitpunkt T2 von einem zu einem geöffneten Betriebszustand des formschlüssigen Schaltelementes F äquivalenten Druckwert p_FO auf ein Schließniveau p_FS angehoben. Das Anheben des Betätigungsdruckes p_F bewirkt, dass die Schaltelementhälfte 6 ausgehend von ihrer ersten Schaltstellung S1 bzw. ihrem ersten Endanschlag, der einem vollständig geöffneten Betriebszustand des formschlüssigen Schaltelementes F entspricht, in Richtung seiner zweiten Endstellung bzw. Schaltstellung S2 verfahren wird. Die verschiedenen Stellungen der Schaltelementhälfte 6 in Bezug auf die Schaltelementhälfte 7 sind durch den Verlauf W6 in Fig. 4 näher dargestellt.

Mit der Aufforderung zum Schließen des formschlüssigen Schaltelementes F wird auch eine Überwachung der aktuellen Differenzdrehzahl n_F zwischen den Schaltelementhälften 6 und 7 des formschlüssigen Schaltelementes F sowie der aktuellen Positionen der Schaltelementhälften 6 und 7 gestartet, wobei die Differenzdrehzahl n_F zwischen den Schaltelementhälften 6, 7 vorliegend über entsprechende Sensoren messtechnisch ermittelt und bei weiteren Ausführungsformen des Getriebes rechnerisch bestimmt wird.

Das bedeutet, dass während eines Schließvorganges des formschlüssigen Schaltelementes F das Auftreten einer Zahn-auf-Zahn-Stellung im Bereich des formschlüssigen Schaltelementes F überwacht wird, zu welchen sich die Schaltelementhälften 6, 7 ohne definierten Formschluss in zwischen den ersten Endpositionen S1 und den zweiten Endpositionen S2 angeordneten Stellungen S3 befinden und lediglich im Bereich der einander zugewandten Stirnflächen 4A und 5A der Zahnprofile 4 und 5 im Wesentlichen schlupffrei miteinander in Reibeingriff stehen.

Wird eine Differenzdrehzahl n_F zwischen den Schaltelementhälften 6 und 7 kleiner als ein erster Differenzdrehzahlschwellwert n_Fd1 ermittelt und hat die Schaltelementhälfte 6 die zweite Endstellung S2 noch nicht erreicht bzw. befindet sich die Schaltelementhälfte in ihrer Stellung S3, wird über die Überwachung im Bereich des formschlüssigen Schaltelementes F in der nachfolgend beschriebenen Art und Weise eine Zahn-auf-Zahn-Stellung ermittelt.

Zu einem Zeitpunkt T3 erreicht die Schaltelementhälfte 6 die zwischen der ersten Endstellung S1 und der zweiten Schaltstellung S2 angeordnete Stellung S3. Da die erste Schaltelementhälfte 6 trotz entsprechender Beaufschlagung durch den Betätigungsdruck p_F nach dem Zeitpunkt T3 nicht weiter in Richtung der Schaltelementhälfte 7 bzw. der zweiten Endstellung S2 bewegt wird und die Differenzdrehzahl n_F des formschlüssigen Schaltelementes ab dem Zeitpunkt T3 kleiner als der erste Differenzdrehzahlschwellwert n_fd1 bzw. im Wesentlichen gleich Null ist, wird eine Zahn-auf-Zahn-Stellung im Bereich des formschlüssigen Schaltelementes F erkannt. Dabei wird über die Überwachung eine Bewertung der ermittelten Zahn-auf-Zahn-Stellung durchgeführt und nach Ablauf des Zeitraumes zwischen den Zeitpunkten T3 und T4 erkannt, dass die Zahn-auf-Zahn-Stellung die Herstellung des Formschlusses im Bereich des formschlüssigen Schaltelementes F innerhalb einer vordefinierten Schaltzeit verhindert.

Zur Auflösung der Zahn-auf-Zahn-Stellung-wird der Betätigungsdruck p_F des formschlüssigen Schaltelementes F bzw. wird die Betätigungskraft des formschlüssigen Schaltelementes F zum Zeitpunkt T4 auf ein Auflösniveau p_FA der Betätigungskraft bzw. des Betätigungsdruckes abgesenkt, zu dem sich zwischen den Schaltelementhälften eine Differenzdrehzahl n_F oberhalb eines zweiten Differenzdrehzahlschwellwertes n_Fd2 einstellt, der vorliegend dem ersten Differenzdrehzahlschwellwert n_Fd1 entspricht und bei weiteren Varianten des Verfahrens in Abhängigkeit des jeweils vorliegenden Anwendungsfalles von diesem in geeigneter Art und Weise abweicht, um die jeweils durchzuführende Schaltung in gewünschtem Umfang durchführen zu können.

Dabei entspricht das Auflösniveau p_FA des Betätigungsdruckes p_F des formschlüssigen Schaltelementes F einem Druckniveau, zu dem sich die Reibung zwischen den Schaltelementhälften 6 und 7 bzw. den Kupplungspartnern auf ein derartiges Niveau einstellt, dass sich zwischen den Schaltelementhälften 6 und 7 ein den Formschluss des formschlüssigen Schaltelementes F begünstigender Differenzdrehzahlwert oberhalb des zweiten Differenzdrehzahlschwellwertes n_Fd2 ergibt, der einem sehr niedrigen Drehzahlniveau entspricht. Während die Differenzdrehzahl n_F durch die Absenkung des Betätigungsdruckes p_F in Richtung eines Drehzahlwertes oberhalb des zweiten Differenzdrehzahlschwellwertes n_Fd2 ansteigt und sich die Zahn-auf-Zahn-Stellung im Bereich des formschlüssigen Schaltelementes F auflöst, wird die erste Schaltelementhälfte 6 in ihre zweite Endstellung S2 verschoben. Zum Zeitpunkt T5 befinden sich die Zahnprofile 4 und 5 der Schaltelementhälften 6 und 7 vollständig in formschlüssigen Eingriff und die erste Schaltelementhälfte 6 hat ihre zweite Endstellung S2 erreicht.

Da der Formschluss im Bereich des formschlüssigen Schaltelementes F zum Zeitpunkt T5 vollständig hergestellt ist und die Auflösung einer Zahn-auf-Zahn-Stellung im Bereich des formschlüssigen Schaltelementes F erkannt wird, wird die Betätigungskraft bzw. der Betätigungsdruck p_F des formschlüssigen Schaltelementes ab dem Zeitpunkt T5 wieder auf ein das formschlüssige Schaltelement in geschlossenem Betriebszustand haltendes Schließniveau p_FS1 geführt, welches vorliegend dem Schließdruckniveau p_FS zwischen den Zeitpunkten T2 und T4 entspricht und bei weiteren Varianten des erfindungsgemäßen Verfahrens in Abhängigkeit des jeweils vorliegenden Anwendungsfalles oder auch betriebszustandsabhängig von diesem abweicht.

Bei einer Variante des Verfahrens wird der Betätigungsdruck p_F des formschlüssigen Schaltelementes F entsprechend der durchgezogenen Linie des Verlaufes des Betätigungsdruckes p_F während eines negativen Druckpulses zunächst zum Zeitpunkt T4 sprungartig auf das Auflösniveau p_FA abgesenkt und zum Zeitpunkt T5 sprungartig auf das Schließniveau p_FS1 angehoben.

Bei einer hierzu alternativen Variante des vorbeschrieben Verfahrens wird der Betätigungsdruck p_F zum Zeitpunkt T4 in der durch die strichpunktierte Linie näher dargestellten Art und Weise zunächst über eine Druckrampe abgesenkt und anschließend zum Zeitpunkt T5 sprungartig auf das Schließdruckniveau p_F_S1 angehoben, um die Zahn-auf-Zahn-Stellungen im Bereich des formschlüssigen Schaltelementes in der vorbeschrieben Art und Weise kontrolliert und geräuscharm aufzulösen und den Formschluss im Bereich des formschlüssigen Schaltelementes F innerhalb einer vordefinierten Schaltzeit mit hoher Schaltgüte herzustellen.

Bei einer weiteren hierzu alternativen Variante des vorbeschrieben Verfahrens wird der Betätigungsdruck p_F zum Zeitpunkt T4 zunächst der durchgezogenen Linie entsprechend sprunghaft auf das Auflösniveau p_FA abgesenkt und anschließend entlang einer Druckrampe, die in Fig. 4 als 2-Punktstrichlierte Linie gezeigt ist, bis zum Zeitpunkt T5 auf das Schließdruckniveau p_F_S1 angehoben, um die Zahn-auf-Zahn-Stellungen im Bereich des formschlüssigen Schaltelementes in der vorbeschrieben Art und Weise kontrolliert und geräuscharm aufzulösen und den Formschluss im Bereich des formschlüssigen Schaltelementes F innerhalb einer vordefinierten Schaltzeit mit hoher Schaltgüte herzustellen.

Eine weitere alternative Vorgehensweise sieht vor, den Betätigungsdruck p_F des formschlüssigen Schaltelementes ab dem Zeitpunkt T4 entlang der 3-Punkt-strichlierten Linie über eine Druckrampe bis zu einem Zeitpunkt T6, der zeitlich vor dem Zeitpunkt T5 liegt, abzusenken und anschließend über eine weitere Druckrampe bis zum Zeitpunkt T5 auf das Schließdruckniveau p_FS1 anzuheben, um die Zahn-auf-Zahn-Stellungen im Bereich des formschlüssigen Schaltelementes in der vorbeschrieben Art und Weise kontrolliert und geräuscharm aufzulösen und den Formschluss im Bereich des formschlüssigen Schaltelementes F innerhalb einer vordefinierten Schaltzeit mit hoher Schaltgüte herzustellen.

Eine rampenförmigen Veränderung des Betätigungsdruckes p_F des formschlüssigen Schaltelementes F ermöglicht im Vergleich zu einer sprunghaften Veränderung jeweils eine feinere Justierung bzw. eine sensiblere Betätigung des formschlüssigen Schaltelementes F, was sich jeweils positiv auf die Schaltgüte auswirkt.

Unabhängig von der ausgewählten Alternative der erfindungsgemäßen Vorgehensweise ist die Rückschaltung vom fünften Vorwärtsgang "5" in Richtung des vierten Vorwärtsganges "4" jeweils mit der angestrebten bzw. gewünschten Schaltgüte innerhalb einer vordefinierten Schaltzeit durchführbar.

Schaltungen, insbesondere Lastschaltungen, an welchen zumindest ein formschlüssiges Schaltelement und vorzugsweise auch ein reibschlüssiges Schaltelement beteiligt sind, sind generell mittels des vorbeschriebenen Verfahrens mit einem reproduzierbaren Schaltverhalten darstellbar. Dabei werden besonders die Schaltzeiten von derartigen Schaltungen ohne zusätzliche mechanische Synchronisierungen ohne ein unkontrolliertes, schlagartiges Auflösen einer Zahn-auf-Zahn-Stellung im Bereich des während der Durchführung der angeforderten Schaltung zuzuschaltenden formschlüssigen Schaltelementes mit geringem Betätigungsaufwand eingehalten.

Der Reibschluss der Zahn-auf-ZahnStellung wird durch Verändern der Betätigungskraft aufgelöst und der Formschluss wird bei sehr geringen Differenzdrehzahlen zwischen den Schaltelementhälften eines formschlüssigen Schaltelementes bei gleichzeitig relativ hoher Kraftausübung auf den oder die beweglichen Teile des formschlüssigen Schaltelementes kontrolliert hergestellt.

Die Betätigung eines formschlüssigen Schaltelementes kann neben einer hydraulischen Druckbeaufschlagung auch über elektrische Steller oder eine pneumatische Kraftaufbringung durchgeführt werden, wobei das kontrollierte Auflösen der Zahn-auf-Zahn-Stellung und das kontrollierte geräuscharme Einspuren des formschlüssigen Schaltelementes dann durch entsprechendes Einstellen des pneumatischen Drucks oder des Betätigungsstromes des elektrischen Stellers im gleichen Umfang wie bei der vorbeschriebenen hydraulischen Ansteuerung des formschlüssigen Schaltelementes F des Getriebes 1 erfolgt.

### Bezugszeichen

| | |
|---|---|
| 1 | Getriebe |
| 2 | Antriebswelle |
| 3 | Abtriebswelle |
| 4, 5 | Zahnprofil |
| 4A, 5A | Stirnfläche |
| 6, 7 | Schaltelementhälfte |
| "1" bis "9" | Übersetzung für Vorwärtsfahrt |
| A bis F | Schaltelement |
| n_F | Differenzdrehzahl des formschlüssigen Schaltelementes F |
| n_Fd1 | erster Differenzdrehzahlschwellwert |
| n_Fd2 | zweiter Differenzdrehzahlschwellwert |
| SV | Schaltverlauf |
| p_F | Betätigungsdruck des formschlüssigen Schaltelementes |
| p_FS | Schließniveau |
| p_FO | Öffnungsdruckniveau |
| p_FA | Auflösniveau |
| p_FS1 | Schließniveau |
| S1 | erste Endposition |
| S2 | zweite Endposition |
| S3 | dritte Schaltstellung |
| T0 bis T6 | diskreter Zeitpunkt |
| t | Zeit |
| W6 | Verlauf der Relativbewegung des Schaltelementes 6 |

## Patentansprüche

1. Verfahren zum Betreiben eines Getriebes (1) mit mindestens einem formschlüssigen Schaltelement (A, F) mit wenigstens zwei miteinander im Bereich von Zahnprofilen (4, 5) in formschlüssigen Eingriff bringbaren Schaltelementhälften (6, 7), wobei ein Öffnen und Schließen des formschlüssigen Schaltelementes (F) durch eine in Abhängigkeit einer Betätigungskraft des formschlüssigen Schaltelementes (F) stehende Relativbewegung (W6) zwischen zu einem geöffneten Betriebszustand des formschlüssigen Schaltelementes (F) äquivalenten ersten Endpositionen (S1) und zu einem geschlossenen Betriebszustand des formschlüssigen Schaltelementes äquivalenten zweiten Endpositionen (S2) der Schaltelementhälften (6, 7) erfolgt und während eines Schließvorganges das Auftreten einer Zahn-auf-Zahn-Stellung des formschlüssigen Schaltelementes (F) überwacht wird, zu welchen die Schaltelementhälften (6, 7) ohne Formschluss in zwischen den ersten Endpositionen (S1) und den zweiten Endpositionen (S2) angeordneten Stellungen (S3) befinden und lediglich im Bereich einander zugewandter Stirnflächen (4A, 5A) der Zahnprofile (4, 5) miteinander in Reibeingriff stehen, wobei bei einer Anforderung zum Schließen des formschlüssigen Schaltelementes (F) das formschlüssige Schaltelement (F) mit einer das Schaltelement in Schließrichtung betätigenden Betätigungskraft (p_FS) beaufschlagt wird, **dadurch gekennzeichnet, dass** bei einer Anforderung zum Schließen des formschlüssigen Schaltelementes (F) eine aktuelle Differenzdrehzahl (n_F) zwischen den Schaltelementhälften (6, 7) des formschlüssigen Schaltelementes (F) sowie die aktuellen Positionen (W6) der Schaltelementhälften (6, 7) ermittelt werden und bei Vorliegen einer Differenzdrehzahl (n_F) kleiner als ein erster Differenzdrehzahlschwellwert (n_Fd1) und einer Zahn-auf-Zahn-Stellung des formschlüssigen Schaltelementes (F) die Betätigungskraft zur Auflösung der Zahn-auf-Zahn-Stellung auf ein Auflösniveau (p_FA) geführt wird, zu dem sich zwischen den Schaltelementhälften (6, 7) eine Differenzdrehzahl (n_F) oberhalb eines zweiten Differenzdrehzahlschwellwertes (n_Fd2) einstellt.

2. Verfahren nach Anspruch 1, **dadurch gekennzeichnet, dass** das Auflösniveau (p_FA) der Betätigungskraft (p_F) in Abhängigkeit des aktuell über das formschlüssige Schaltelement (F) zu führenden Drehmomentes variiert wird.

3. Verfahren nach Anspruch 1 oder 2, **dadurch gekennzeichnet, dass** die Betätigungskraft (p_F) sprungartig auf das Auflösniveau (p_FA) geführt wird.

4. Verfahren nach Anspruch 1 oder 2, **dadurch gekennzeichnet, dass** die Betätigungskraft (p_F) über eine Rampe auf das Auflösniveau (p_FA) geführt wird.

5. Verfahren nach einem der Ansprüche 1 bis 4, **dadurch gekennzeichnet, dass** die Betätigungskraft (p_F) bei Erkennen einer Auflösung einer Zahn-auf-Zahn-Stellung im Bereich des formschlüssigen Schaltelementes (F) sprungartig auf ein das formschlüssige Schaltelement schließendes Schließniveau (p_FS1) geführt wird.

6. Verfahren nach einem der Ansprüche 1 bis 4, **dadurch gekennzeichnet, dass** die Betätigungskraft (p_F) bei Erkennen einer Auflösung einer Zahn-auf-Zahn-Stellung im Bereich des formschlüssigen Schaltelementes (F) rampenförmig auf ein das formschlüssige Schaltelement schließendes Schließniveau (p_FS1) geführt wird.

7. Verfahren nach Anspruch 5 oder 6, **dadurch gekennzeichnet, dass** das Schließniveau (p_FS1) der Betätigungskraft (p_F) in Abhängigkeit des aktuell über das formschlüssige Schaltelement zu führenden Drehmomentes variiert wird.

8. Verfahren nach einem der Ansprüche 1 bis 7, **dadurch gekennzeichnet, dass** der erste Differenzdrehzahlschwellwert (n_Fd1) im Wesentlichen Null ist.

9. Verfahren nach einem der Ansprüche 1 bis 8, **dadurch gekennzeichnet, dass** der zweite Differenzdrehzahlschwellwert (n_Fd2) im Wesentlichen Null ist.

10. Verfahren nach einem der Ansprüche 1 bis 9, **dadurch gekennzeichnet, dass** die Differenzdrehzahl (n_F) zwischen den Schaltelementhälften (6, 7) messtechnisch ermittelt wird.

11. Verfahren nach einem der Ansprüche 1 bis 9, **dadurch gekennzeichnet, dass** die Differenzdrehzahl rechnerisch bestimmt wird.

## Claims

1. Method for operating a transmission (1) having at least one positively-locking shifting element (A, F) with at least two shifting element halves (6, 7) which can be placed in positively locking engagement with one another in the region of toothed profiles (4, 5), wherein the positively locking shifting element (F) is opened and closed by means of a relative movement (W6), dependent on an activation force of the positively locking shifting element (F), between first end positions (S1) which are equivalent to an opened operating state of the positively locking shifting element (F), and second end positions (S2) which are equivalent to a closed operating state of the positively locking shifting element, of the shifting element halves (6, 7) and during a closing process the occurrence of a tooth-on-tooth position of the positively locking shifting element (F), at which the shifting element halves (6, 7) are located, without positive locking, in positions (S3) arranged between the first end positions (S1) and the second end positions (S2) and are in frictional engagement with one another only in the region of end faces (4A, 5A) of the toothed profiles (4, 5) facing one another, is monitored, wherein in the event of a request to close the positively locking shifting element (F) an activation force (p_FS) which activates the shifting element in the closing direction is applied to the positively locking shifting element (F), **characterized in that** in the event of a request to close the positively locking shifting element (F) a current differential rotational speed (n_F) between the shifting element halves (6, 7) of the positively locking shifting element (F) and the current positions (W6) of the shifting element halves (6, 7) is determined and when a differential rotational speed (n_F) which is smaller than a first differential rotational speed threshold value (n_Fd1) and a tooth-on-tooth position of the positively locking shifting element (F) are present the activation force for triggering the tooth-on-tooth position is adjusted to a triggering level (p_FA) at which a differential rotational speed (n_F) between the shifting elements (6, 7) is set above a second differential rotational speed threshold value (n_Fd2).

2. Method according to Claim 1, **characterized in that** the triggering level (p_FA) of the activation force (p_F) is varied as a function of the torque which is to be adjusted on a current basis by means of the positively locking shifting element (F).

3. Method according to Claim 1 or 2, **characterized in that** the activation force (p_F) is suddenly adjusted to the triggering level (p_FA).

4. Method according to Claim 1 or 2, **characterized in that** the activation force (p_F) is adjusted to the triggering level (p_FA) by means of a ramp.

5. Method according to one of Claims 1 to 4, **characterized in that** when triggering of a tooth-on-tooth position is detected in the region of the positively locking shifting element (F), the activation force (p_F) is suddenly adjusted to a closing level (p_FS1) which closes the positively locking shifting element.

6. Method according to one of Claims 1 to 4, **characterized in that** when triggering of a tooth-on-tooth position is detected in the region of the positively locking shifting element (F), the activation force (p_F) is adjusted in a ramp shape to a closing level (p_FS1) which closes the positively locking shifting element.

7. Method according to Claim 5 or 6, **characterized in that** the closing level (p_FS1) of the activation force (p_F) is varied as a function of the torque which is to be adjusted on a current basis by means of the positively locking shifting element.

8. Method according to one of Claims 1 to 7, **characterized in that** the first differential rotational speed threshold value (n_Fd1) is essentially zero.

9. Method according to one of Claims 1 to 8, **characterized in that** the second differential rotational speed threshold value (n_Fd2) is essentially zero.

10. Method according to one of Claims 1 to 9, **characterized in that** the differential rotational speed (n_F) between the shifting element halves (6, 7) is determined by measuring.

11. Method according to one of Claims 1 to 9, **characterized in that** the differential rotational speed is determined by computation.

## Revendications

1. Procédé pour faire fonctionner une boîte de vitesses (1) comprenant au moins un élément de commutation à engagement par complémentarité de forme (A, F), comprenant au moins deux moitiés d'éléments de commutation (6, 7) pouvant être amenées en engagement par complémentarité de forme l'une avec l'autre dans la région de profilés dentés (4, 5), une ouverture et une fermeture de l'élément de commutation à engagement par complémentarité de forme (F) s'effectuant par un mouvement relatif (W6) en fonction d'une force d'actionnement de l'élément de commutation engagement par complémentarité de forme (F) entre des premières positions d'extrémité (S1) des moitiés d'élément de commutation (6, 7) équivalentes à un état de fonctionnement ouvert de l'élément de commutation à engagement par complémentarité de forme (F) et des deuxièmes positions d'extrémité (S2) des moitiés d'élément de commutation (6, 7) équivalentes à un état de fonctionnement fermé de l'élément de commutation à engagement par complémentarité de forme, et pendant une opération de fermeture, l'apparition d'une position dent sur dent de l'élément de commutation à engagement par complémentarité de forme (F) étant surveillée, à laquelle apparition les moitiés d'éléments de commutation (6, 7) se trouvent sans engagement par complémentarité de forme dans des positions (S3) disposées entre les premières positions d'extrémité (S1) et les deuxièmes positions d'extrémité (S2), et sont uniquement en engagement par friction l'une avec l'autre dans la région de faces frontales en regard (4A, 5A) des profilés dentés (4, 5), et dans le cas d'une demande de fermeture de l'élément de commutation à engagement par complémentarité de forme (F), l'élément de commutation à engagement par complémentarité de forme (F) étant sollicité par une force d'actionnement (p_FS) actionnant l'élément de commutation dans la direction de fermeture, **caractérisé en ce que** dans le cas d'une demande de fermeture de l'élément de commutation à engagement par complémentarité de forme (F), une vitesse de rotation différentielle actuelle (n_F) entre les moitiés d'éléments de commutation (6, 7) de l'élément de commutation à engagement par complémentarité de forme (F) ainsi que les positions actuelles (W6) des moitiés d'éléments de commutation (6, 7) étant déterminées, et en présence d'une vitesse de rotation différentielle (n_F) inférieure à une première valeur seuil de vitesse de rotation différentielle (n_Fd1) et d'une position dent sur dent de l'élément de commutation à engagement par complémentarité de forme (F), la force d'actionnement pour la suppression de la position dent sur dent étant amenée à un niveau de suppression (p_FA) auquel s'établit une vitesse de rotation différentielle (n_F) entre les moitiés d'élément de commutation (6, 7) au-dessus d'une deuxième valeur seuil de vitesse de rotation différentielle (n_Fd2).

2. Procédé selon la revendication 1, **caractérisé en ce que** le niveau de suppression (p_FA) de la force d'actionnement (p_F) est varié en fonction du couple à transmettre actuellement par le biais de l'élément de commutation à engagement par complémentarité de forme (F).

3. Procédé selon la revendication 1 ou 2, **caractérisé en ce que** la force d'actionnement (p_F) est amenée par saut au niveau de suppression (p_FA).

4. Procédé selon la revendication 1 ou 2, **caractérisé en ce que** la force d'actionnement (p_F) est amenée au niveau de suppression (p_FA) par le biais d'une rampe.

5. Procédé selon l'une quelconque des revendications 1 à 4, **caractérisé en ce que** la force d'actionnement (p_F), à la détection d'une suppression d'une position dent sur dent dans la région de l'élément de commutation à engagement par complémentarité de forme (F) est amenée par saut à un niveau de fermeture (p_FS1) fermant l'élément de commutation à engagement par complémentarité de forme.

6. Procédé selon l'une quelconque des revendications 1 à 4, **caractérisé en ce que** la force d'actionnement (p_F), à la détection d'une suppression d'une position dent sur dent dans la région de l'élément de commutation à engagement par complémentarité de forme (F) est amenée en forme de rampe à un niveau de fermeture (p_FS1) fermant l'élément de commutation à engagement par complémentarité de forme.

7. Procédé selon la revendication 5 ou 6, **caractérisé en ce que** le niveau de fermeture (p_FS1) de la force d'actionnement (p_F) est varié en fonction du couple à transmettre actuellement par le biais de l'élément de commutation à engagement par complémentarité de forme.

8. Procédé selon l'une quelconque des revendications 1 à 7, **caractérisé en ce que** la première valeur seuil de vitesse de rotation différentielle (n_Fd1) est essentiellement nulle.

9. Procédé selon l'une quelconque des revendications 1 à 8, **caractérisé en ce que** la deuxième valeur seuil de vitesse de rotation différentielle (n_Fd2) est essentiellement nulle.

10. Procédé selon l'une quelconque des revendications 1 à 9, **caractérisé en ce que** la vitesse de rotation différentielle (n_F) entre les moitiés d'élément de commutation (6, 7) est détectée par une technique de mesure.

11. Procédé selon l'une quelconque des revendications 1 à 9, **caractérisé en ce que** la vitesse de rotation différentielle est déterminée par calcul.
